# EUROPEAN PATENT APPLICATION

(11) **EP 3 422 762 A1**
(43) Date of publication of application: **02.01.2019**
(21) Application number: 16893876.9
(22) Date of filing: 15.03.2016
(51) Int. Cl.: H04W 28/04

(54) **SIGNAL TRANSMISSION METHOD AND BASE STATION**

(71) Applicant: Huawei Technologies Co., Ltd., Longgang District Shenzhen, Guangdong 518129 (CN)
(72) Inventor: LI, Xiaocui, Shenzhen Guangdong 518129 (CN); XU, Kai, Shenzhen Guangdong 518129 (CN)
(74) Representative: Thun, Clemens
(86) International application number: PCT/CN2016/076405
(87) International publication number: WO 2017/156711

(57) **Abstract**

Embodiments of the present invention provide a signal transmission method and a base station. The method includes: determining a structure of a discovery reference signal DRS, where the DRS is carried in a first sub frame of a radio frame on an unlicensed carrier; and transmitting the DRS in the first subframe. The base station in technical solutions of the present invention determines the structure of the discovery reference signal DRS carried in the first subframe of the radio frame on the unlicensed carrier and transmits the DRS in the first subframe. In this way, a structure of a to-be-transmitted DRS can be determined when any subframe preempts a resource.

## Description

### TECHNICAL FIELD

The present invention relates to the communications field, and more specifically, relates to a signal transmission method and a base station.

### BACKGROUND

In a licensed-assisted access using Long Term Evolution (Licensed-Assisted Access Using Long Term Evolution, LAA-LTE) system, a node in the LAA-LTE system uses a channel resource following a listen before talk (Listen Before Talk, LBT) principle. LBT is a carrier sense multiple access (Carrier Sense Multiple Access, CSMA) technology in which a channel resource on an unlicensed spectrum is used to transfer data after it is detected through listening that the channel resource on the unlicensed spectrum is idle.

In an existing LTE system, a base station transmits a discovery reference signal (Discovery Reference Signal, DRS) to UE, so that the UE performs synchronization in a current cell and measures a neighboring cell. The DRS can occupy a maximum of five sub frames. The DRS is transmitted only once within one discovery signal measurement timing configuration (Discovery signals measurement timing configuration, DMTC) (in other words, within one period). The period may be configured to 40 ms, 80 ms, 160 ms, or the like. The DRS includes a primary synchronization signal (Primary Synchronization Signal, PSS), a secondary synchronization signal (Secondary Synchronization Signal, SSS), a cell-specific reference signal (Cell-specific Reference Signal, CRS), and a channel state information-reference signal (Channel State Information-Reference Signal, CSI-RS).

However, in the LAA-LTE system, the DRS accesses a channel through contention following the LBT principle, and a plurality of DRS transmission locations may be configured within one DMTC. Therefore, any sub frame may become a DRS transmission subframe. In this way, in the LAA-LTE system, when any subframe in a radio frame preempts a resource, what structure of a DRS needs to be transferred is a problem that needs to be reselved urgently.

### SUMMARY

Embodiments of the present invention provide a signal transmission method and a base station, which can be used to determine a structure of a DRS transmitted in any subframe of a radio frame in an LAA-LTE system.

According to a first aspect, a signal transmission method is provided. The method includes: determining a structure of a discovery reference signal DRS, where the DRS is carried in a first subframe of a radio frame on an unlicensed carrier; and transmitting the DRS in the first subframe.

A specific structure of a DRS carried in a subframe of a radio frame on an LAA carrier is designed for a base station based on a requirement of the LAA carrier on a DRS structure. The DRS may include a PSS, an SSS, a CRS, and a CSI-RS. In this way, a structure of a to-be-transmitted DRS can be determined when any subframe of the radio frame preempts a resource.

Therefore, the base station determines the structure of the discovery reference signal DRS carried in the first subframe of the radio frame on the unlicensed carrier and transmits the DRS in the first subframe. In this way, a structure of a to-be-transmitted DRS can be determined when any subframe preempts a resource.

With reference to the first aspect, in a first possible implementation of the first aspect, the DRS includes a primary synchronization signal PSS and a secondary synchronization signal SSS that occupy 72 central subcarriers in the first subframe; and the determining a structure of a discovery reference signal DRS includes: determining a first subcarrier in the first subframe, where the first subcarrier is used to transmit, in the first subframe, the PSS and the SSS that are repeated.

In frequency domain, to enable UE to detect frequency and symbol synchronization information of a system as soon as possible, the PSS and the SSS occupy a bandwidth of 1.08 M at a frequency center in frequency domain regardless of the magnitude of a system bandwidth. The bandwidth of 1.08 M includes 6 RBs and 72 subcarriers (actually, only 62 subcarriers around the frequency center are used, and 5 subcarriers are reserved on either side and serving as a guard band). In this embodiment of the present invention, in the first subframe, in addition to the 72 subcarriers occupied by the PSS and the SSS, any other resources may be occupied and used to transmit the PSS and the SSS that are repeated, thereby improving accuracy of the UE in measuring the PSS and the SSS.

Optionally, idle bandwidth resources on two sides of a frequency center for a PSS and an SSS in the prior art may be used. In this way, the bandwidth resources can be fully utilized to transmit the PSS and the SSS that are repeated, improving resource utilization.

With reference to the first aspect, in a second possible implementation of the first aspect, the DRS occupies 12 orthogonal frequency division multiplexing OFDM symbols in the first subframe, and the DRS includes a PSS and an SSS that each occupy one of the OFDM symbols; and the determining a structure of a discovery reference signal DRS includes: determining a first symbol of the 12 OFDM symbols, where the first symbol is used to transmit, in the first subframe, the PSS and the SSS that are repeated.

In time domain, one subframe includes two timeslots, and each timeslot includes seven orthogonal frequency division multiplexing OFDM symbols. In other words, one subframe includes 14 OFDM symbols. A time domain resource occupied by the DRS is 12 OFDM symbols, and the DRS usually occupies the first 12 symbols in the first subframe. The PSS and the SSS each occupy one OFDM symbol. Generally, the PSS occupies a last OFDM symbol of a first timeslot (a timeslot 0), and the SSS occupies a last but one OFDM symbol of the first timeslot. In this embodiment of the present invention, the PSS and the SSS that are repeated may be transmitted in any two idle symbols of the 12 OFDM symbols occupied by the DRS, thereby improving measurement accuracy.

With reference to the first possible implementation of the first aspect or the second possible implementation of the first aspect, in a third possible implementation of the first aspect, the DRS occupies the 12 orthogonal frequency division multiplexing OFDM symbols in the first subframe, and the DRS further includes a cell-specific reference signal CRS that occupies one of the OFDM symbols and/or a channel state information-reference signal CSI-RS that occupies one of the OFDM symbols; and the determining a structure of a discovery reference signal DRS includes: determining, as a second symbol, an OFDM symbol other than the OFDM symbols for transmitting the PSS and the SSS in the 12 OFDM symbols, where the second symbol is used to transmit the CRS and/or the CSI-RS in the first subframe.

To perform data communication with a base station, UE in a connected state needs to perform necessary measurement and synchronization tracking. For example, the UE needs to measure channel state information CSI by using a CRS or a CSI-RS, so that the base station can select a proper modulation and coding scheme for scheduling data of the UE. For another example, by using a CRS, the UE needs to perform synchronization tracking, to be specific, fine time and frequency synchronization, to ensure data demodulation performance. For still another example, the UE further needs to perform, by using a CRS, measurement with respect to radio resource management, to ensure mobility performance of the UE.

In a conventional LTE system, transmitting a DRS that includes a PSS, an SSS, a CRS, and a CSI-RS needs a maximum of five subframes. In an LAA-LTE system according to the embodiments of the present invention, each subframe may be used to transmit a DRS by following an LBT principle. Therefore, all idle symbols other than the OFDM symbols occupied by the PSS and the SSS in the 12 symbols occupied by the DRS can be used to transmit the CRS and/or the CSI-RS.

In some possible implementations, the DRS includes a PSS, an SSS, and a CRS. All idle symbols other than the OFDM symbols occupied by the PSS and the SSS in the 12 symbols occupied by the DRS can be used to transmit the CRS.

With reference to the first aspect or any possible implementation of the first possible implementation of the first aspect to the third possible implementation of the first aspect, in a fourth possible implementation of the first aspect, the SSS includes a first sequence structure that is transmitted in a subframe 0 in the radio frame or a second sequence structure that is transmitted in a subframe 5 of the radio frame.

In a conventional LTE system, an SSS is transmitted in a last but one symbol of a first timeslot. In a cell, each SSS is formed by interleaving two 31-bit m-sequences. In a same cell, a series of valid values of two SSSs (where an SSS 1 is in the subframe 0 and an SSS 2 is in the subframe 5) in a radio frame are different. In the same cell, the SSS 2 and the SSS 1 use two same m-sequences (m-sequences). A difference lies in that in the SSS 2, locations of the two sequences (X and Y) are exchanged in frequency domain. Therefore, the SSS 2 and the SSS 1 belong to different sets. In this embodiment of the present invention, SSSs of different sequences are respectively transmitted in the subframe 0 and the subframe 5. An SSS of any sequence may be selected, based on a carrier requirement, for another subframe in the radio frame, thereby determining the structure of the DRS transmitted in the first subframe.

With reference to the first aspect or any possible implementation of the first possible implementation of the first aspect to the fourth possible implementation of the first aspect, in a fifth possible implementation of the first aspect, if the first subframe is the subframe 0, a subframe 1, a sub frame 2, a subframe 3, or a subframe 4, the SSS in the DRS carried in the first subframe is the first sequence structure; or if the first subframe is the subframe 5, a subframe 6, a subframe 7, a subframe 8, or a subframe 9, the SSS in the DRS carried in the first subframe is the second sequence structure.

In a base station, the subframe 0, the subframe 1, the subframe 2, the subframe 3, or the subframe 4 may be set to correspond to a first SSS. To be specific, when any subframe of the subframe 0 to the subframe 4 preempts a resource, the resource may be used to transmit the first SSS (an SSS transmitted in the subframe 0 in the prior art). The subframe 5, the subframe 6, the subframe 7, the subframe 8, and the subframe 9 may be set to correspond to a second SSS. To be specific, when any subframe of the subframe 5 to the subframe 9 preempts a resource, the resource may be used to transmit the second SSS (an SSS transmitted in the subframe 5 in the prior art).

According to a second aspect, this application provides a base station. The base station includes modules for performing the method according to the first aspect or any possible implementation of the first aspect.

According to a third aspect, this application provides a base station, including a processor and a memory.

The memory stores a program. The processor executes the program to perform the signal transmission method according to the first aspect or any possible implementation of the first aspect.

Based on the foregoing technical solutions, in the embodiments of the present invention, the structure of the discovery reference signal DRS carried in the first subframe of the radio frame on the unlicensed carrier is determined, and the DRS is transmitted in the first subframe. In this way, a structure of a to-be-transmitted DRS can be determined when any subframe preempts a resource.

### BRIEF DESCRIPTION OF DRAWINGS

To describe the technical solutions in the embodiments of the present invention more clearly, the following briefly describes the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.
FIG. 1 is a schematic diagram of transmitting a DRS in the prior art;
FIG. 2 is a schematic diagram of transmitting a DRS according to an embodiment of the present invention;
FIG. 3 is a schematic diagram of a signal transmission method according to an embodiment of the present invention;
FIG. 4 is a schematic structural diagram of a subframe according to an embodiment of the present invention;
FIG. 5 is a schematic diagram of a specific embodiment of a signal transmission method according to embodiments of the present invention;
FIG. 6 is a schematic diagram of another specific embodiment of a signal transmission method according to embodiments of the present invention;
FIG. 7 is a schematic diagram of still another specific embodiment of a signal transmission method according to embodiments of the present invention;
FIG. 8 is a schematic diagram of still another specific embodiment of a signal transmission method according to embodiments of the present invention;
FIG. 9 is a schematic diagram of still another specific embodiment of a signal transmission method according to embodiments of the present invention;
FIG. 10 is a schematic block diagram of a base station according to an embodiment of the present invention; and
FIG. 11 is a schematic structural diagram of a base station according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

It should be understood that, the technical solutions in the embodiments of the present invention may be applied to various communications systems that use an LAA mechanism, such as: Global System for Mobile Communications (Global System for Mobile Communications, GSM), a Code Division Multiple Access (Code Division Multiple Access, CDMA) system, a Wideband Code Division Multiple Access (Wideband Code Division Multiple Access, WCDMA) system, a Long Term Evolution (Long Term Evolution, LTE) system, an LTE frequency division duplex (Frequency Division Duplex, FDD) system, an LTE time division duplex (Time Division Duplex, TDD) system, Universal Mobile Telecommunications System (Universal Mobile Telecommunications System, UMTS), and a future 5G communications system.

It should be further understood that, the user equipment (User Equipment, "UE" for short) in the embodiments of the present invention may communicate with one or more core networks by using a radio access network (Radio Access Network, "RAN" for short), and the terminal device may be referred to as an access terminal, terminal equipment, a subscriber unit, a subscriber station, a mobile station, a mobile console, a remote station, a remote terminal, a mobile device, a user terminal, a terminal, a radio communications device, a user agent, or a user apparatus. The user equipment may be a cellular phone, a cordless phone, a Session Initiation Protocol (Session Initiation Protocol, SIP) phone, a wireless local loop (Wireless Local Loop, WLL) station, a personal digital assistant (Personal Digital Assistant, PDA), a handheld device having a wireless communication function, a computing device, another processing device connected to a wireless modem, an in-vehicle device, a wearable device, or user equipment in a future 5G network.

In a radio communications network, devices need to use a frequency resource to transfer information. The frequency resource is also referred to as a spectrum. Spectra used in a radio communications system are classified into a licensed spectrum (Licensed Spectrum) and an unlicensed spectrum (Unlicensed Spectrum). The licensed spectrum can be used only after authorization is obtained. The unlicensed spectrum does not require authorization and can be legitimately used by anyone. A carrier on the licensed spectrum is a licensed carrier, and a carrier on the unlicensed spectrum is an unlicensed carrier.

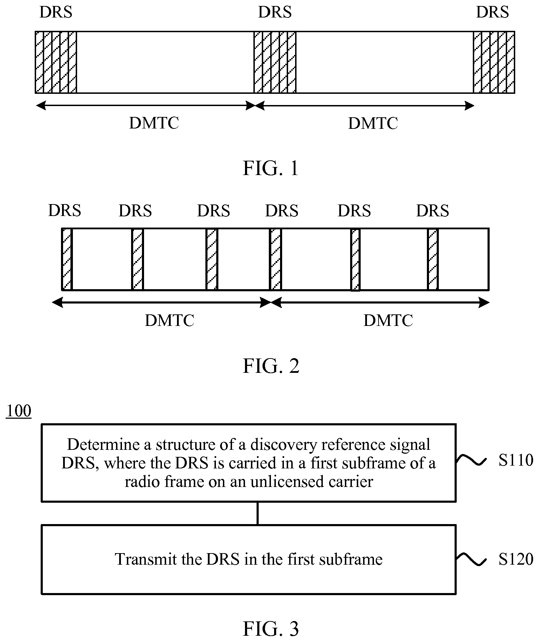

FIG. 1 is a schematic diagram of transmitting a DRS in the prior art. In a conventional LTE system, a DRS occupies a maximum of five subframes and is transmitted periodically. A transmission period may be 40 ms, 80 ms or 160 ms. To be specific, the DRS is transmitted only once in one DMTC. The DRS includes a PSS, an SSS, a CRS, and a CSI-RS. The PSS and the SSS may be used to synchronize user equipment with a base station and identify a physical cell. In addition, in the conventional LTE, there are two different types of SSS sequences respectively transferred in a subframe 0 and a subframe 5.

FIG. 2 shows a schematic diagram of transmitting a DRS according to an embodiment of the present invention. In an LAA-LTE system, an unlicensed carrier is accessed through contention. Therefore, a DRS is transmitted by chance following an LBT principle. One DRS occupies 12 OFDM symbols, and a plurality of DRS transmission locations may be configured in one DMTC. To be specific, any subframe may preempt a resource and becomes a subframe for transmitting a DRS. Therefore, when any subframe in the DMTC preempts a resource, a base station cannot determine a structure of a to-be-transmitted DRS.

FIG. 3 is a schematic diagram of a signal transmission method 100 according to an embodiment of the present invention. The method 100 may be performed by a base station. The method 100 includes the following steps: S110. Determine a structure of a discovery reference signal DRS, where the DRS is carried in a first subframe of a radio frame on an unlicensed carrier.

S120. Transmit the DRS in the first subframe.

Specifically, a specific structure of a DRS carried in a subframe of a radio frame on an LAA carrier is designed for a base station based on a requirement of the LAA carrier on a DRS structure. The DRS may include a PSS, an SSS, a CRS, and a CSI-RS. In this way, a structure of a to-be-transmitted DRS can be determined when any subframe of the radio frame preempts a resource.

Therefore, in the signal transmission method according to this embodiment of the present invention, the structure of the discovery reference signal DRS carried in the first subframe of the radio frame on the unlicensed carrier is determined, and the DRS is transmitted in the first subframe. In this way, a structure of a to-be-transmitted DRS can be determined when any subframe preempts a resource.

Optionally, the DRS includes a primary synchronization signal PSS and a secondary synchronization signal SSS that occupy 72 central subcarriers in the first subframe; and
the determining a structure of a discovery reference signal DRS includes:
determining a first subcarrier in the first subframe, where the first subcarrier is used to transmit, in the first subframe, the PSS and the SSS that are repeated.

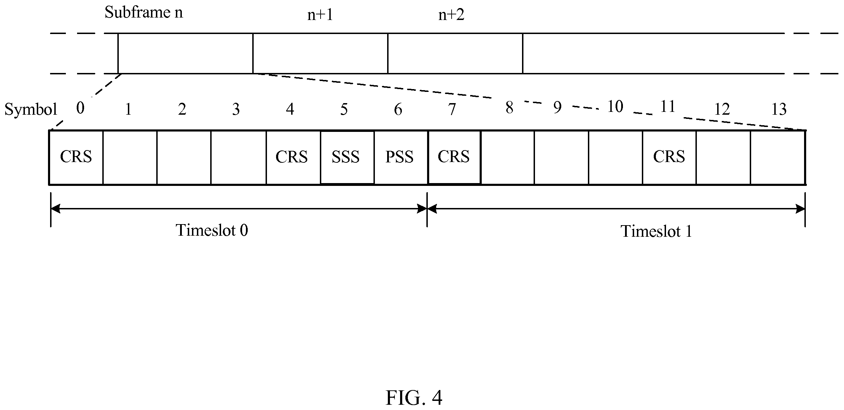

Specifically, the DRS follows an LBT principle in an LAA mechanism. To prevent another LAA node or a system such as a wireless access point (Wireless Fidelity Access Point, WiFi AP) from contending for a right of channel use, continuity of the signal DRS needs to be maintained. As shown in FIG. 4, one subframe includes two timeslots, and each timeslot includes seven orthogonal frequency division multiplexing (Orthogonal Frequency Division Multiplexing, OFDM) symbols. In frequency domain, to enable UE to detect frequency and symbol synchronization information of a system as soon as possible, the PSS and the SSS occupy a bandwidth of 1.08 M at a frequency center in frequency domain regardless of the magnitude of a system bandwidth. The bandwidth of 1.08 M includes 6 RBs and 72 subcarriers (actually, only 62 subcarriers around the frequency center are used, and 5 subcarriers are reserved on either side and serving as a guard band). In this embodiment of the present invention, in the first subframe, in addition to the 72 subcarriers occupied by the PSS and the SSS, any other 72 subcarriers in the first subframe may be occupied and used to transmit the PSS and the SSS that are repeated, thereby improving accuracy of the UE in measuring the PSS and the SSS.

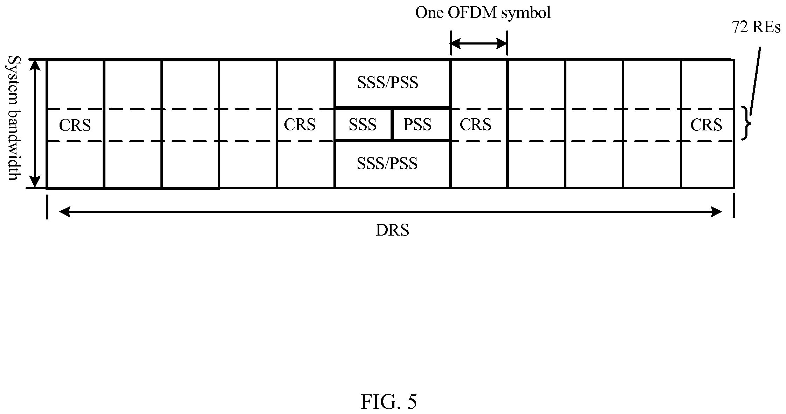

Optionally, idle bandwidth resources on two sides of a frequency center for a PSS and an SSS in the prior art may be used. In this way, the bandwidth resources can be fully utilized to transmit the PSS and the SSS that are repeated (as shown in FIG. 5), improving resource utilization.

It should be understood that in addition to the PSS and the SSS, the DRS further includes a CRS and/or a CSI-RS. In this embodiment of the present invention, a location of a resource occupied by these two signals in the first subframe is not limited. Except the foregoing resources occupied by the PSS and the SSS, the CRS and/or the CSI-RS may occupy any resource in the first subframe.

Optionally, the DRS occupies 12 orthogonal frequency division multiplexing OFDM symbols in the first subframe, and the DRS includes a PSS and an SSS that each occupy one of the OFDM symbols; and
the determining a structure of a discovery reference signal DRS includes:
determining a first symbol of the 12 OFDM symbols, where the first symbol is used to transmit, in the first subframe, the PSS and the SSS that are repeated.

Specifically, the DRS follows an LBT principle in an LAA mechanism. To prevent another LAA node or a system such as a Wireless Fidelity access point (Wireless Fidelity Access Point, WiFi AP) from contending for a right of channel use, continuity of the signal DRS needs to be maintained. Therefore, measurement accuracy may be improved by enhancing the PSS and the SSS. In time domain, one subframe includes two timeslots, and each timeslot includes seven orthogonal frequency division multiplexing OFDM symbols. In other words, one subframe includes 14 OFDM symbols. A time domain resource occupied by the DRS is 12 OFDM symbols, and the DRS occupies the first 12 symbols in the first subframe. The PSS and the SSS each occupy one OFDM symbol. Generally, the PSS occupies a last OFDM symbol of a first timeslot (a timeslot 0), and the SSS occupies a last but one OFDM symbol of the first timeslot. In this embodiment of the present invention, the PSS and the SSS that are repeated may be transmitted in any two idle symbols of the 12 OFDM symbols occupied by the DRS, thereby improving measurement accuracy.

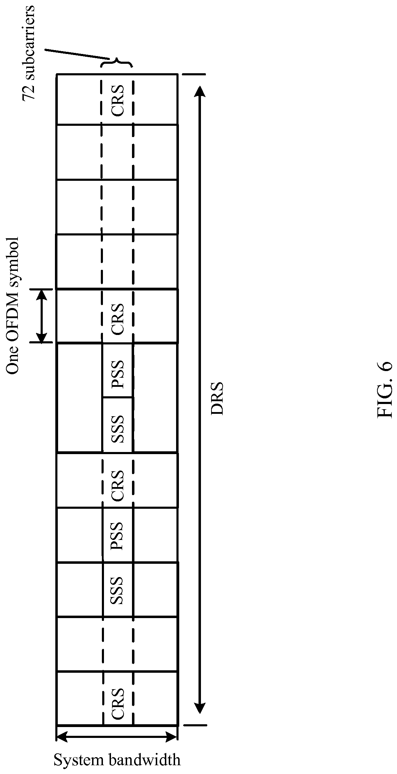

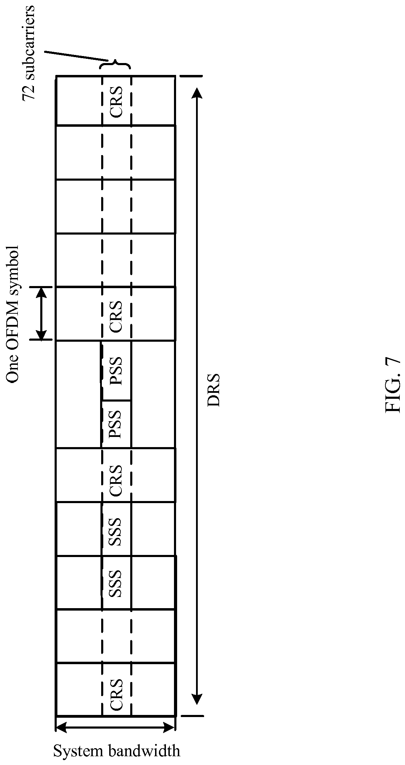

Optionally, when idle symbols of the symbols occupied by the DRS are used to transmit again the PSS and the SSS, distribution of locations occupied by the PSS and the SSS in the first subframe may be set arbitrarily. As shown in FIG. 6, the PSS and the SSS are repeated as a whole in an idle symbol 2 and an idle symbol 3. Alternatively, as shown in FIG. 7, the PSS and the SSS are each repeated in a continuous manner. However, the present invention sets no limitation thereto.

It should be understood that in addition to the PSS and the SSS, the DRS further includes a CRS and/or a CSI-RS. In this embodiment of the present invention, a resource occupied by these two signals in the first subframe is not limited. If the DRS includes only the CRS, all remaining idle symbols other than the foregoing resources occupied by the PSS and the SSS can be used to transmit the CRS. If the DRS includes the CRS and the CSI-RS, all remaining idle symbols other than the foregoing resources occupied by the PSS and the SSS can be used to transmit the CRS and the CSI-RS. In consideration of demodulation performance, the CRS and the CSI-RS each appear in pair. However, the present invention sets no limitation thereto.

It should be noted that, to reduce modifications to a standard, in this embodiment of the present invention, a CRS location in conventional LTE is used as much as possible. For ease of description, for example, a CRS distribution location in this embodiment of the present invention is the same as that in conventional LTE. However, the present invention sets no limitation thereto.

Optionally, the DRS occupies the 12 orthogonal frequency division multiplexing OFDM symbols in the first subframe, and the DRS further includes a cell-specific reference signal CRS that occupies one of the OFDM symbols and/or a channel state information-reference signal CSI-RS that occupies one of the OFDM symbols; and
the determining a structure of a discovery reference signal DRS includes:
determining, as a second symbol, an OFDM symbol other than the OFDM symbols for transmitting the PSS and the SSS in the 12 OFDM symbols, where the second symbol is used to transmit the CRS and/or the CSI-RS in the first subframe.

Specifically, to perform data communication with a base station, UE in a connected state needs to perform necessary measurement and synchronization tracking. For example, the UE needs to measure channel state information CSI by using a CRS or a CSI-RS, so that the base station can select a proper modulation and coding scheme for scheduling data of the UE. For another example, by using a CRS, the UE needs to perform synchronization tracking, to be specific, fine time and frequency synchronization, to ensure data demodulation performance. For still another example, the UE further needs to perform, by using a CRS, measurement with respect to radio resource management (Radio Resource Management, "RRM" for short), to ensure mobility performance of the UE.

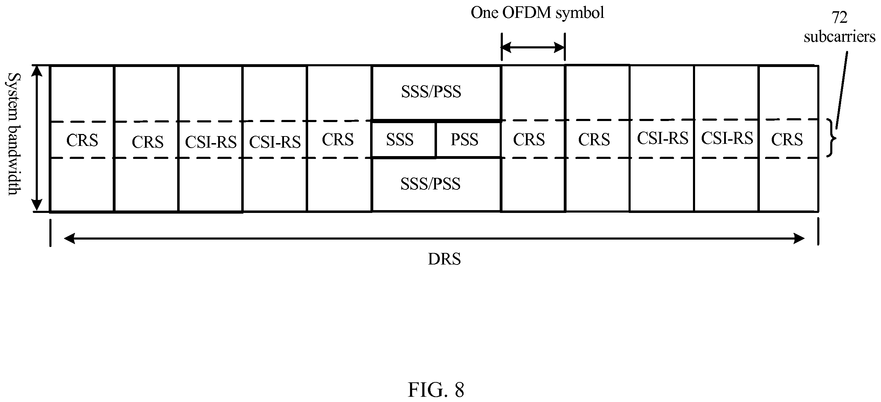

In a conventional LTE system, transmitting a DRS that includes a PSS, an SSS, a CRS, and a CSI-RS needs a maximum of five subframes. In an LAA-LTE system according to the embodiments of the present invention, each subframe may be used to transmit a DRS by following an LBT principle. Therefore, the CRS and the CSI-RS may be transmitted in an idle symbol of the 12 symbols occupied by the DRS (as shown in FIG. 8). In a prior-art LTE system, a distribution location of the CRS in the first subframe is a first symbol and a fifth symbol in a first timeslot and a first symbol and a fifth symbol in a second timeslot. Therefore, of the 12 symbols occupied by the DRS, except the four used to transfer the CRS and the two used to transfer the PSS and the SSS, six remaining symbols are idle symbols (the second symbol). Therefore, all the six symbols can be used to transmit the CRS and/or the CSI-RS, thereby further determining the structure of the DRS.

It should be noted that, to reduce modifications to a standard, in this embodiment of the present invention, a CRS location in conventional LTE is used as much as possible. For ease of description, for example, a CRS distribution location in this embodiment of the present invention is the same as that in conventional LTE. However, the present invention sets no limitation thereto.

It can be learned from the foregoing descriptions that if the PSS and the SSS that are repeated are transmitted on idle subcarriers corresponding to the symbols currently occupied by the PSS and the SSS, idle symbols in the 12 symbols may include a symbol 1, a symbol 2, a symbol 3, a symbol 8, a symbol 9, and a symbol 10 (to be specific, these six symbols are the second symbol), which may be used to transmit the CRS and/or the CSI-RS. If the PSS and the SSS that are repeated are transmitted by using two idle symbols (in the symbol 1, the symbol 2, the symbol 3, the symbol 8, the symbol 9, and the symbol 10) of the 12 symbols, except the two symbols of the foregoing six idle symbols, four remaining symbols (the second symbol) can be used to transmit the CRS and/or the CSI-RS.

It should be noted that in consideration of demodulation performance, the CRS and the CSI-RS each appear in pair. To be specific, of the six idle symbols, two may be used to transmit the CRS, and four may be used to transmit the CSI-RS; alternatively, of the six idle symbols, four may be used to transmit the CRS, and two may be used to transmit the CSI-RS. If there are four idle symbols, two are used to transmit the CRS and two are used to transmit the CSI-RS. However, the present invention sets no limitation thereto.

It should be understood that, in this embodiment of the present invention, locations of each CRS and each CSI-RS in the idle symbols are not limited.

Optionally, the SSS includes a first sequence structure that is transmitted in a subframe 0 in the radio frame or a second sequence structure that is transmitted in a subframe 5 of the radio frame.

Specifically, in a conventional LTE system, a PSS is transmitted in a last symbol of a first timeslot of each of a subframe 0 and a subframe 5, and an SSS is transmitted in a last but one symbol of the same timeslot. In a cell, two PSSs in a radio frame are the same, and each SSS is formed by interleaving two 31-bit m-sequences. In a same cell, a series of valid values of two SSSs (where an SSS 1 is in the subframe 0 and an SSS 2 is in the subframe 5) in a radio frame are different. In the same cell, the SSS 2 and the SSS 1 use two same m-sequences (m-sequences). A difference lies in that in the SSS 2, locations of the two sequences (X and Y) are exchanged in frequency domain. Therefore, the SSS 2 and the SSS 1 belong to different sets.

In this embodiment of the present invention, SSSs of different sequences are respectively transmitted in the subframe 0 and the subframe 5. An SSS of a different sequence may be selected, based on a carrier requirement, for another subframe in the radio frame, thereby determining a sequence structure of the SSS in the DRS.

Optionally, in this embodiment of the present invention, if the first subframe is the subframe 0, a subframe 1, a subframe 2, a subframe 3, or a subframe 4, the SSS in the DRS carried in the first subframe is the first sequence structure; or if the first subframe is the subframe 5, a subframe 6, a subframe 7, a subframe 8, or a subframe 9, the SSS in the DRS carried in the first subframe is the second sequence structure.

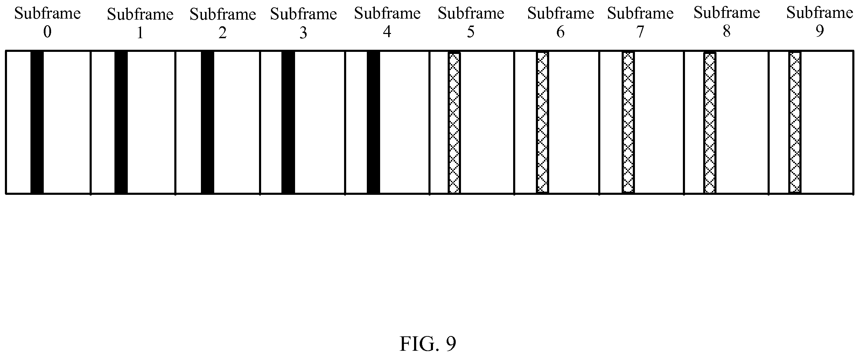

For example, as shown in FIG. 9, in a base station, the subframe 0, the subframe 1, the subframe 2, the subframe 3, or the subframe 4 may be set to correspond to the first sequence structure of the SSS. To be specific, when any subframe of the subframe 0 to the subframe 4 preempts a resource, the SSS in the to-be-transmitted DRS is of the first sequence structure (an SSS transmitted in the subframe 0 in the prior art). The subframe 5, the subframe 6, the subframe 7, the subframe 8, and the subframe 9 may be set to correspond to a second SSS. To be specific, when any subframe of the subframe 5 to the subframe 9 preempts a resource, the SSS in the to-be-transmitted DRS is of the second sequence structure (an SSS transmitted in the subframe 5 in the prior art).

It should be understood that, generally, in this embodiment of the present invention, the SSS in the DRS transmitted in the subframe 0 and the SSS in the DRS transmitted in the subframe 5 respectively correspond to a sequence structure of the SSS transmitted in the subframe 0 and a sequence structure of the SSS transmitted in the subframe 5 in the prior-art LTE system. However, the present invention sets no limitation thereto.

It should be further understood that a correspondence between a sequence structure of the SSS and a subframe other than the subframe 0 and the subframe 5 may be in another form, which also falls within the protection scope of the present invention.

Therefore, in the signal transmission method according to this embodiment of the present invention, the structure of the discovery reference signal DRS carried in the first subframe of the radio frame on the unlicensed carrier is determined, and the DRS is transmitted in the first subframe. In this way, a structure of a to-be-transmitted DRS can be determined when any subframe preempts a resource.

It should be understood that sequence numbers of the foregoing processes do not mean execution sequences in various embodiments of the present invention. The execution sequences of the processes should be determined based on functions and internal logic of the processes, and should not be construed as any limitation on the implementation processes of the embodiments of the present invention.

The foregoing describes in detail the signal transmission method according to the embodiments of the present invention, and the following describes a base station and a channel quality grading device according to the embodiments of the present invention.

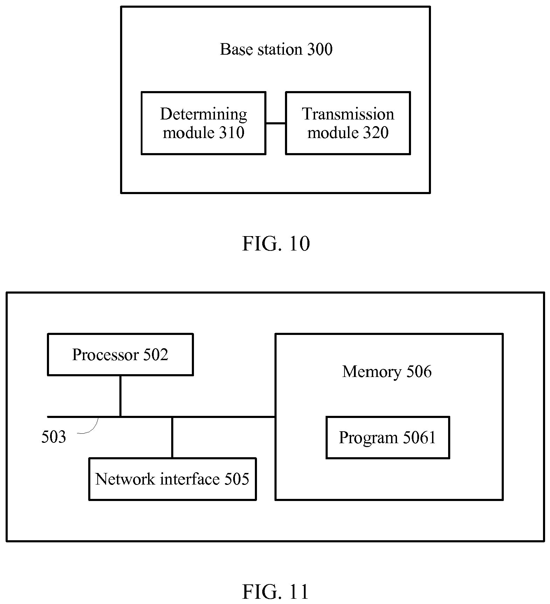

FIG. 10 shows a schematic structural diagram of a base station 300 according to an embodiment of the present invention. As shown in FIG. 10, the base station 300 includes:
a determining module 310, configured to determine a structure of a discovery reference signal DRS, where the DRS is carried in a first subframe of a radio frame on an unlicensed carrier; and
a transmission module 320, configured to transmit the DRS in the first subframe.

Therefore, the signal transmission base station according to this embodiment of the present invention determines the structure of the discovery reference signal DRS carried in the first subframe of the radio frame on the unlicensed carrier, and transmits the DRS in the first subframe. In this way, a structure of a to-be-transmitted DRS can be determined when any subframe preempts a resource.

In this embodiment of the present invention, optionally, the DRS includes a primary synchronization signal PSS and a secondary synchronization signal SSS that occupy 72 subcarriers in the first subframe; and
the determining module is specifically configured to:
determine a first subcarrier in the first subframe, where the first subcarrier is used to transmit, in the first subframe, the PSS and the SSS that are repeated.

In this embodiment of the present invention, optionally, the DRS occupies 12 orthogonal frequency division multiplexing OFDM symbols in the first subframe, and the DRS includes a PSS and an SSS that each occupy one of the OFDM symbols; and
the determining module is specifically configured to:
determine a first symbol of the 12 OFDM symbols, where the first symbol is used to transmit, in the first subframe, the PSS and the SSS that are repeated.

Optionally, the DRS occupies the 12 orthogonal frequency division multiplexing OFDM symbols in the first subframe, and the DRS further includes a cell-specific reference signal CRS that occupies one of the OFDM symbols and/or a channel state information-reference signal CSI-RS that occupies one of the OFDM symbols; and
the determining module is specifically configured to:
determine, as a second symbol, an OFDM symbol other than the OFDM symbols for transmitting the PSS and the SSS in the 12 OFDM symbols, where the second symbol is used to transmit the CRS and/or the CSI-RS in the first subframe.

Optionally, the SSS includes a first sequence structure that is transmitted in a subframe 0 in the radio frame or a second sequence structure that is transmitted in a subframe 5 of the radio frame.

In this embodiment of the present invention, optionally, if the first subframe is the subframe 0, a subframe 1, a subframe 2, a subframe 3, or a subframe 4, the SSS in the DRS carried in the first subframe is the first sequence structure; or if the first subframe is the subframe 5, a subframe 6, a subframe 7, a subframe 8, or a subframe 9, the SSS in the DRS carried in the first subframe is the second sequence structure.

Therefore, the signal transmission base station according to this embodiment of the present invention determines the structure of the discovery reference signal DRS carried in the first subframe of the radio frame on the unlicensed carrier, and transmits the DRS in the first subframe. In this way, a structure of a to-be-transmitted DRS can be determined when any subframe preempts a resource.

The base station 300 according to this embodiment of the present invention may correspond to the base station in the signal transmission method according to the embodiments of the present invention, and the foregoing and other operations and/or functions of the modules in the base station 300 are separately intended to implement corresponding processes of the foregoing methods. For brevity, details are not described herein again.

FIG. 11 shows a structure of a base station according to another embodiment of the present invention. The base station includes at least one processor 502 (for example, a CPU), at least one network interface 505 or another communications interface, a memory 506, and at least one communications bus 503 that is configured to implement connection and communication between these apparatuses. The processor 502 is configured to execute to an executable module, for example, a computer program, stored in the memory 506. The memory 506 may include a high-speed random access memory (RAM: Random Access Memory), or may further include a non-volatile memory (non-volatile memory), for example, at least one magnetic disk memory. A communicative connection with at least one other network element is implemented by using the at least one network interface 505 (which may be wired or wireless).

In some implementations, the memory 506 stores a program 5061, and the processor 502 executes the program 5061 to perform the following operations:
determining a structure of a discovery reference signal DRS, where the DRS is carried in a first subframe of a radio frame on an unlicensed carrier; and
transmitting the DRS in the first subframe.

Optionally, the DRS includes a primary synchronization signal PSS and a secondary synchronization signal SSS that occupy 72 central subcarriers in the first subframe; and
the processor 502 is further configured to:
determine a first subcarrier in the first subframe, where the first subcarrier is used to transmit, in the first subframe, the PSS and the SSS that are repeated.

The DRS occupies 12 orthogonal frequency division multiplexing OFDM symbols in the first subframe, and the DRS includes a PSS and an SSS that each occupy one of the OFDM symbols; and
the processor 502 is further configured to:
determine a first symbol of the 12 OFDM symbols, where the first symbol is used to transmit, in the first subframe, the PSS and the SSS that are repeated.

In this embodiment of the present invention, optionally, the DRS occupies the 12 orthogonal frequency division multiplexing OFDM symbols in the first subframe, and the DRS further includes a cell-specific reference signal CRS that occupies one of the OFDM symbols and/or a channel state information-reference signal CSI-RS that occupies one of the OFDM symbols; and
the processor 502 is further configured to:
determine, as a second symbol, an OFDM symbol other than the OFDM symbols for transmitting the PSS and the SSS in the 12 OFDM symbols, where the second symbol is used to transmit the CRS and/or the CSI-RS in the first subframe.

Optionally, the SSS includes a first sequence structure that is transmitted in a subframe 0 in the radio frame or a second sequence structure that is transmitted in a subframe 5 of the radio frame.

In this embodiment of the present invention, optionally, if the first subframe is the subframe 0, a subframe 1, a subframe 2, a subframe 3, or a subframe 4, the SSS in the DRS carried in the first subframe is the first sequence structure; or if the first subframe is the subframe 5, a subframe 6, a subframe 7, a subframe 8, or a subframe 9, the SSS in the DRS carried in the first subframe is the second sequence structure.

It can be learned from the foregoing technical solutions provided in this embodiment of the present invention, the base station determines the structure of the discovery reference signal DRS carried in the first subframe of the radio frame on the unlicensed carrier, and transmits the DRS in the first subframe. In this way, a structure of a to-be-transmitted DRS can be determined when any subframe preempts a resource.

It should be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not mean execution sequences in various embodiments of the present invention. The execution sequences of the processes should be determined based on functions and internal logic of the processes, and should not be construed as any limitation on the implementation processes of the embodiments of the present invention.

Persons of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. Persons skilled in the art may use different methods to implement the described functions for each particular application, but it should not be considered that the implementation goes beyond the scope of the present invention.

It may be clearly understood by persons skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementations of the present invention, but are not intended to limit the protection scope of the present invention. Any variation or replacement readily figured out by persons skilled in the art within the technical scope disclosed in the present invention shall fall within the protection scope of the present invention. Therefore, the protection scope of the present invention shall be subject to the protection scope of the claims.

## Claims

1. A signal transmission method, wherein the method comprises:
determining a structure of a discovery reference signal DRS, wherein the DRS is carried in a first subframe of a radio frame on an unlicensed carrier; and
transmitting the DRS in the first subframe.

2. The method according to claim 1, wherein the DRS comprises a primary synchronization signal PSS and a secondary synchronization signal SSS that occupy 72 central subcarriers in the first subframe; and
the determining a structure of a discovery reference signal DRS comprises:
determining a first subcarrier in the first subframe, wherein the first subcarrier is used to transmit, in the first subframe, the PSS and the SSS that are repeated.

3. The method according to claim 1, wherein the DRS occupies 12 orthogonal frequency division multiplexing OFDM symbols in the first subframe, and the DRS comprises a PSS and an SSS that each occupy one of the OFDM symbols; and
the determining a structure of a discovery reference signal DRS comprises:
determining a first symbol of the 12 OFDM symbols, wherein the first symbol is used to transmit, in the first subframe, the PSS and the SSS that are repeated.

4. The method according to claim 2 or 3, wherein the DRS occupies the 12 orthogonal frequency division multiplexing OFDM symbols in the first subframe, and the DRS further comprises a cell-specific reference signal CRS that occupies one of the OFDM symbols and/or a channel state information-reference signal CSI-RS that occupies one of the OFDM symbols; and
the determining a structure of a discovery reference signal DRS comprises:
determining, as a second symbol, an OFDM symbol other than the OFDM symbols for transmitting the PSS and the SSS in the 12 OFDM symbols, wherein the second symbol is used to transmit the CRS and/or the CSI-RS in the first subframe.

5. The method according to any one of claims 1 to 4, wherein the SSS comprises a first sequence structure that is transmitted in a subframe 0 in the radio frame or a second sequence structure that is transmitted in a subframe 5 of the radio frame.

6. The method according to claim 5, wherein if the first subframe is the subframe 0, a subframe 1, a subframe 2, a subframe 3, or a subframe 4, the SSS in the DRS carried in the first subframe is the first sequence structure; or
if the first subframe is the subframe 5, a subframe 6, a subframe 7, a subframe 8, or a subframe 9, the SSS in the DRS carried in the first subframe is the second sequence structure.

7. Abase station, wherein the base station comprises:
a determining module, configured to determine a structure of a discovery reference signal DRS, wherein the DRS is carried in a first subframe of a radio frame on an unlicensed carrier; and
a transmission module, configured to transmit the DRS in the first subframe.

8. The base station according to claim 7, wherein the DRS comprises a primary synchronization signal PSS and a secondary synchronization signal SSS that occupy 72 subcarriers in the first subframe; and
the determining module is specifically configured to:
determine a first subcarrier in the first subframe, wherein the first subcarrier is used to transmit, in the first subframe, the PSS and the SSS that are repeated.

9. The base station according to claim 8, wherein the DRS occupies 12 orthogonal frequency division multiplexing OFDM symbols in the first subframe, and the DRS comprises a PSS and an SSS that each occupy one of the OFDM symbols; and
the determining module is specifically configured to:
determine a first symbol of the 12 OFDM symbols, wherein the first symbol is used to transmit, in the first subframe, the PSS and the SSS that are repeated.

10. The base station according to claim 8 or 9, wherein the DRS occupies the 12 orthogonal frequency division multiplexing OFDM symbols in the first subframe, and the DRS further comprises a cell-specific reference signal CRS that occupies one of the OFDM symbols and/or a channel state information-reference signal CSI-RS that occupies one of the OFDM symbols; and
the determining module is specifically configured to:
determine, as a second symbol, an OFDM symbol other than the OFDM symbols for transmitting the PSS and the SSS in the 12 OFDM symbols, wherein the second symbol is used to transmit the CRS and/or the CSI-RS in the first subframe.

11. The base station according to any one of claims 7 to 10, wherein the SSS comprises a first sequence structure that is transmitted in a subframe 0 in the radio frame or a second sequence structure that is transmitted in a subframe 5 of the radio frame.

12. The base station according to any one of claims 7 to 11, wherein if the first subframe is the subframe 0, a subframe 1, a sub frame 2, a subframe 3, or a subframe 4, the SSS in the DRS carried in the first subframe is the first sequence structure; or
if the first subframe is the subframe 5, a subframe 6, a subframe 7, a subframe 8, or a subframe 9, the SSS in the DRS carried in the first subframe is the second sequence structure.
